# FASCICULE DE BREVET EUROPEEN

(11) **EP 1 410 342 B1**
(45) Date de publication et mention de la délivrance du brevet: **21.02.2007**
(21) Numéro de dépôt: 02762388.3
(22) Date de dépôt: 23.07.2002
(51) Int. Cl.: G07F 7/00

(54) **PROCEDE D'ENREGISTREMENT LOCAL DE DONNEES NUMERIQUES POUR LA TELEVISION**
VERFAHREN ZUR LOKALEN AUFZEICHNUNG VON DIGITALEN DATEN FÜR DAS DIGITALE FERNSEHEN
METHOD FOR LOCAL RECORDING OF TELEVISION DIGITAL DATA

(30) Priorité: 24.07.2001 DE 10135888
(43) Date de publication de la demande: 21.04.2004
(73) Titulaire: SmarDTV S.A., 1033 Cheseaux-sur-Lausanne (CH)
(72) Inventeur: LOISEL, Yann, F-13600 La Ciotat (FR)
(74) Mandataire: Leman Consulting S.A.
(86) Numéro de dépôt international: PCT/EP2002/008207
(87) Numéro de publication internationale: WO 2003/010722

(56) Documents cités:
- EP-A- 0 912 052
- EP-A- 0 936 812
- WO-A-00/22777
- WO-A-00/79368
- DE-A- 19 923 250
- FR-A- 2 732 537
- US-A- 5 923 754

## Description

La présente invention concerne un procédé d'enregistrement local de données numériques reçues par un réseau de transmission.

Elle s'applique en particulier au domaine de la télévision numérique pour procéder à un enregistrement local de données reçues par un réseau de transmission numérique, notamment par satellite ou par câbles.

A l'heure actuelle, les programmes de télévision numérique sont reçus par un réseau de transmission au niveau d'un décodeur chez l'utilisateur. Ce décodeur est constitutif d'un dispositif d'accès conditionnel pouvant comprendre différents moyens d'autorisation.

La transmission des données numériques est généralement cryptée pour éviter tout usage illicite par des personnes non autorisées.

Les données sont ensuite décryptées au niveau du dispositif d'accès conditionnel en considérant les autorisations accordées à l'utilisateur. De tels décodeurs permettent généralement afficher directement le flux de données ainsi que décryptées.

Comme le décodeur n'a généralement pas de capacité d'enregistrement, le contenu du programme de télévision numérique est seulement disponible pour être regardé à l'heure de la diffusion. Si l'utilisateur souhaite le regarder à un autre moment, il est alors nécessaire d'effectuer un enregistrement local en respectant les contraintes de re-cryptage pour éviter toute copie illicite au niveau local.

Pour répondre à cet objectif de re-cryptage local, on a déjà pensé à proposer certains dispositifs. Ainsi, les documents US-A-5 897 218 et FR-A- 2 732 537 divulguent un cryptage local pour un enregistrement au niveau du décodeur ou d'un dispositif raccordé à celui-ci. Cependant, les techniques divulguées dans ces documents utilisent le même algorithme de re-cryptage que celui utilisé pour désembrouiller le flux reçu par le réseau de transmission, ce qui en fait une solution propriétaire non généralis.

On connaît également du document EP-A-0 936 812 une méthode d'enregistrement local susceptible d'utiliser un algorithme d'encryption local différent.

En outre, ce document propose l'utilisation de dispositifs portables tels des cartes à puce pour stocker des paramètres importants de cryptage et particulièrement des clés.

Cela étant, la technique présentée selon cette antériorité a l'inconvénient de stocker avec le flux de données cryptées localement l'intégralité de la clé ayant servi à ce cryptage local. Certes cette clé est elle-même brouillée par une autre clé, mais le perçage du cryptage de la clé stockée avec les données permet de recouvrir directement, en clair, l'intégralité du programme de télévision numérique.

Par conséquent, aucune des techniques actuellement connues ne donne entièrement satisfaction quant à l'efficacité du cryptage local effectué.

L'invention permet de remédier aux inconvénients des techniques connues jusqu'alors.

Elle propose pour ce faire un procédé qui permet de combiner au moins deux clés différentes dont l'une d'entre elles seulement est stockée avec les données cryptées localement.

Un personne mal attentionnée ne peut donc, par simple découverte de la clé stockée avec les données cryptées localement, parvenir à leur décryptage.

Un autre objet de l'invention est de faire coopérer un module portable de sécurité, tel une carte à puce, avec un dispositif fixe afin de disposer d'un ensemble plus souple d'utilisation (notamment dans l'attribution des clés, leur gestion et leur modifications) et plus sûr (en supprimant le stockage et certaines opérations au niveau du décodeur lui-même).

Un autre avantage de l'invention est de permettre la combinaison éventuelle du système d'enregistrement local et du décodeur tel que connu actuellement pour recevoir les données issues du réseau de transmission et les décrypter puis les afficher.

D'autres buts et avantages apparaîtront au cours de la description qui suit qui présente un mode de réalisation préféré de l'invention.

La présente invention concerne un procédé d'enregistrement local de données numériques reçues par un réseau de transmission, dans lequel on crypte les données numériques reçues avec une clé locale d'enregistrement et on stocke localement les données cryptées, caractérisé par le fait
- qu'on génère une clé de contenu,
- qu'on combine la clé de contenu et une clé de base pour obtenir la clé locale d'enregistrement,
- qu'on stocke conjointement la clé de contenu et les données cryptées avec la clé locale d'enregistrement.

Selon des variantes préférées de ce procédé :
- la clé de base est stockée sur un module portable de sécurité,
- on combine la clé de contenu et la clé de base sur le module portable de sécurité,
- on signe la clé de contenu avec une clé de signature avant son stockage conjoint avec les données cryptées,
- on stocke la clé de signature sur un module portable de sécurité,
- on génère la clé de contenu de façon aléatoire, à chaque enregistrement d'un flux de données numériques,
- on affiche les données numériques enregistrées par :
   - recouvrement de la clé de contenu stockée,
   - combinaison de la clé de contenu recouvrée avec la clé de base pour reproduire la clé locale d'enregistrement,
   - décryptage des données numériques avec la clé locale d'enregistrement,
   - transmission des données numériques aux moyens d'affichage.
- les données numériques sont reçues cryptées du réseau de transmission puis décryptées par un algorithme de cryptage,
- on utilise un algorithme de cryptage différent pour le cryptage avec la clé locale d'enregistrement,
- on utilise des données numériques de diffusion télévisuelle.

Les dessins ci-joints sont donnés à titre d'exemples et ne sont pas limitatifs de l'invention. Ils représentent seulement un mode de réalisation de l'invention et permettront de la comprendre aisément.
La figure 1 est un bloc diagramme des étapes de mise en oeuvre de l'invention dans un mode de réalisation préféré,
la figure 2 montre une possibilité de décryptage suite au cryptage local dans un mode de réalisation préféré.

Le procédé selon l'invention pourra être mis en oeuvre par un appareil constitué par un boîtier renfermant différents moyens électroniques de cryptage et de décryptage ainsi que des moyens de stockage de données.

De façon préférée, cet appareil est constitué d'une base comprenant des moyens locaux d'encryptage ainsi que des moyens de mémorisation qui coopèrent avec un ou plusieurs modules portables de sécurité 6 avantageusement constitués par des cartes à puce pouvant répondre à des normes connues.

Cette coopération entre la base de l'appareil et les modules 6 s'effectuera au moyen d'un lecteur adapté.

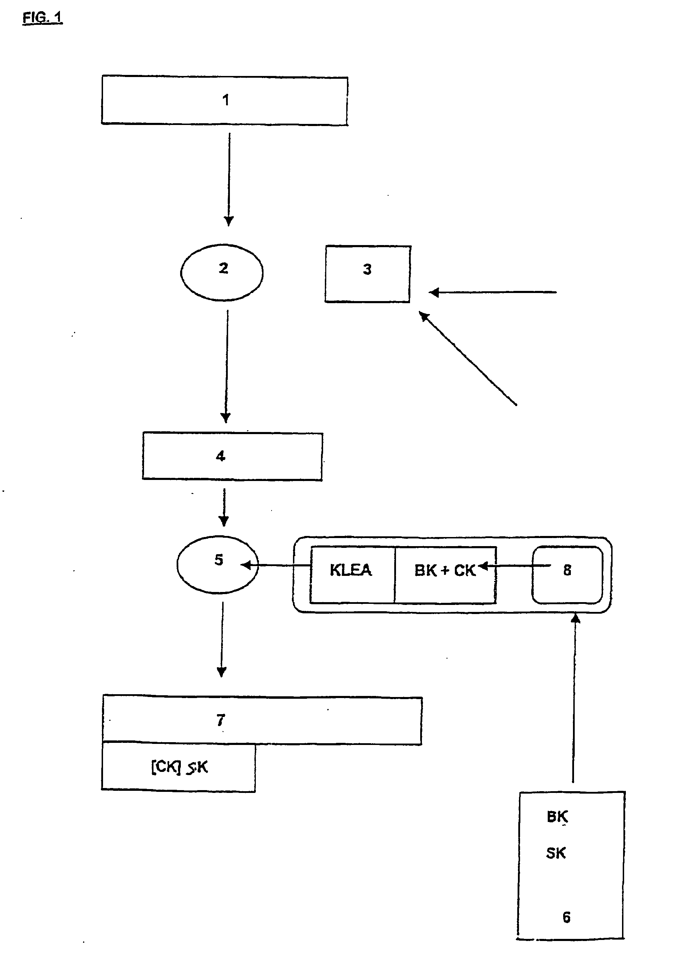

En se référant à la figure 1, on a d'abord illustré les phases classiques et connues en elles-mêmes de réception et de décryptage d'un flux de données de télévision numériques depuis un réseau, par exemple satellitaire.

A cette figure, des données entrant 1 qui sont cryptées par le fournisseur du programme de télévision numérique parviennent jusqu'à un dispositif d'accès conditionnel 2 présent chez l'utilisateur. Ce dispositif 2 a pour fonction de recevoir, de décrypter et de permettre l'affichage du programme de télévision numérique contenu dans le flux de données reçu.

Pour y parvenir, le dispositif d'accès conditionnel 2 comprend différents moyens de décryptage en fonction d'autorisations accordées à l'utilisateur. De façon préférée, les autorisations accordées à l'utilisateur sont contenues sous forme de clés ou d'autres données dans un module d'accès conditionnel 3, par exemple au format carte à puce. Le module 3 peut être lu par le dispositif 2.

Le flux de données entrant 1 peut être correctement décrypté par le dispositif 2 si l'autorisation est véritable, ce qui permet l'extraction de données en clair 4.

A ce niveau, le programme de télévision numérique peut être directement affiché à l'écran et regardé par le téléspectateur.

Cela étant, il est également possible de réaliser un enregistrement local de ce programme de télévision au moyen du procédé de l'invention.

Dans ce cadre, le repère 5 à la figure 1 représente des moyens locaux d'encryptage permettant de re-crypter localement les données ainsi traitées. Les moyens locaux d'encryptage 5 sont préférentiellement constitués par un algorithme local d'encryptage symétrique distinct de celui utilisé pour le cryptage et le décryptage des données entrant 1 issues du réseau de transmission.

Le cryptage local ainsi effectué par les moyens 5 utilise une clé locale d'enregistrement KLEA. De façon caractéristique à l'invention, cette clé locale d'enregistrement KLEA est une combinaison de plusieurs clés et particulièrement de deux clés différentes de BK et CK.

La clé BK est une clé de base pouvant être stockée sur un module portable de sécurité 6 rapporté à la base de l'appareil d'encryptage local. La clé de base BK peut être réutilisée pour le cryptage de plusieurs programmes de télévision numérique. Le stockage sur un module portable de sécurité tel une carte à puce a l'avantage d'éviter sa communication à la base de l'appareil de cryptage local et d'enregistrement. On peut bien entendu prévoir une mise à jour de la clé de base BK par des transmissions à travers le réseau de transmission pour la diffusion de télévision numérique. On peut également prévoir d'autres mises à jour ainsi que la possibilité d'utilisation de plusieurs clés de base BK selon les fournisseurs de programmes de télévision numérique.

Pour réaliser la clé locale d'enregistrement KLEA, la clé de base BK est combinée avec une autre clé appelée clé de contenu CK. La clé de contenu CK est préférentiellement modifiée à chaque opération de stockage local d'un programme de télévision numérique.

Selon le procédé de l'invention, on génère la clé CK par un générateur 8, et ce préférentiellement de façon aléatoire.

On combine ensuite la clé de contenu CK constitutive d'un nombre aléatoire avec la clé de base BK pour obtenir la clé locale d'enregistrement KLEA servant au cryptage local des données.

Il est ensuite possible de stocker localement dans une mémoire adaptée à la fois le flux de données numériques cryptées par la clé KLEA au moyen des moyens locaux d'encryptage 5 et la clé de contenu CK.

Pour assurer une protection encore plus grande contre le piratage, la clé de contenu CK peut être stockée avec le flux de données numériques ainsi crypté 7 après signature par une clé de signature SK.

Avantageusement, la clé de signature SK est également stockée sur un module portable de sécurité 6.

De façon préférée l'étape de combinaison de la clé de base BK et de la clé de contenu CK est opérée au sein du module portable de sécurité 6 pour éviter la transmission en clair de la clé de base BK. La génération aléatoire de la clé de contenu CK peut être, elle, effectuée au niveau de la base de l'appareil ou au sein du module portable de sécurité 6. Le générateur 8 de nombres aléatoires sera positionné en fonction.

Comme indiqué en figure 1, le résultat du procédé consiste dans l'enregistrement local de données cryptées 7 conjointement à la clé de contenu CK qui ne constitue qu'une partie de la clé KLEA ayant permis le cryptage.

Bien entendu, d'autres données peuvent être stockées conjointement et notamment les caractéristiques de transmission (date de transmission notamment).

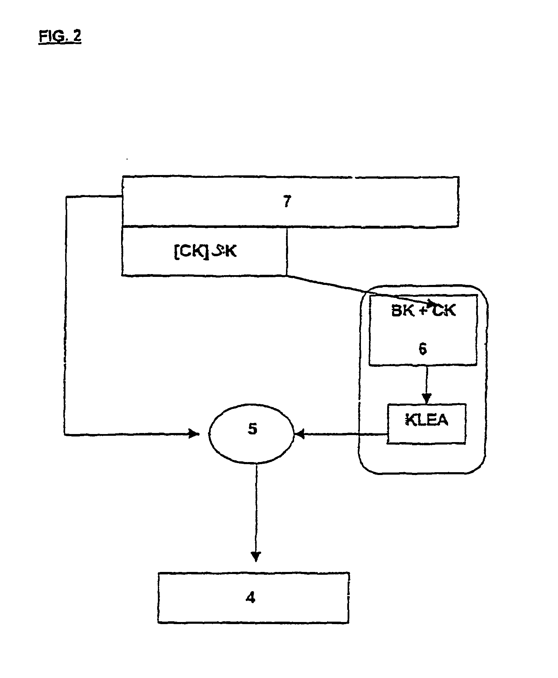

Pour réaliser le décryptage et l'affichage des données cryptées 7, on peut suivre les étapes illustrées en figure 2.

A cette figure, on recouvre la clé de contenu CK directement avec les données cryptées 7, et on vérifie la signature avec la clé de signature SK qui a servi à sa signature.

La clé de contenu CK est ainsi récupérée par le module portable de sécurité 6 et peut subir une recombinaison avec la clé de base BK. Cette nouvelle combinaison assure la reformation de la clé locale d'enregistrement KLEA.

Celle-ci est alors transmise aux moyens locaux d'encryptage 5 pour réaliser un décryptage des données 7.

On récupère alors des données en clair 4 susceptibles d'être affichées.

## Revendications

1. Procédé d'enregistrement local de données numériques reçues par un réseau de transmission, dans lequel on crypte les données numériques reçues avec une clé locale d'enregistrement (KLEA) et on stocke localement les données cryptées (7), **caractérisé par le fait**
- **qu'**on génère une clé de contenu (CK),
- **qu'**on combine la clé de contenu (CK) et une clé de base (BK) pour obtenir la clé locale d'enregistrement (KLEA),
- **qu'**on stocke conjointement la clé de contenu (CK) et les données cryptées (7) avec la clé locale d'enregistrement (KLEA).

2. Procédé selon la revendication 1, **caractérisé par le fait que** la clé de base (BK) est stockée sur un module portable de sécurité (6).

3. Procédé selon la revendication 2, **caractérisé par le fait qu'**on combine la clé de contenu (CK) et la clé de base (BK) sur le module portable de sécurité (6).

4. Procédé selon l'une quelconque des revendications 1 à 3, **caractérisé par le fait qu'**on signe la clé de contenu (CK) avec une clé de signature (SK) avant son stockage conjoint avec les données cryptées (7).

5. Procédé selon la revendication 4, **caractérisé par le fait qu'**on stocke la clé de signature (SK) sur un module portable de sécurité (6).

6. Procédé selon l'une quelconque des revendications 1 à 5, **caractérisé par le fait qu'**on génère la clé de contenu (CK) de façon aléatoire, à chaque enregistrement d'un flux de données numériques.

7. Procédé selon l'une quelconque des revendications 1 à 6, **caractérisé par le fait qu'**on affiche les données numériques enregistrées par :
- recouvrement de la clé de contenu (CK) stockée,
- vérification de la signature avec la clé de signature (SK),
- combinaison de la clé de contenu (CK) recouvrée avec la clé de base (BK) pour reproduire la clé locale d'enregistrement (KLEA),
- décryptage des données numériques (7) avec la clé locale d'enregistrement (KLEA)
- transmission des données numériques aux moyens d'affichage.

8. Procédé selon l'une quelconque des revendications 1 à 7, **caractérisé par le fait**
- **que** les données numériques sont reçues cryptées du réseau de transmission puis décryptées par un algorithme de cryptage,
- **qu'**on utilise un algorithme de cryptage différent pour le cryptage avec la clé locale d'enregistrement (KLEA).

9. Procédé selon l'une quelconque des revendications 1 à 8, **caractérisé par le fait qu'**on utilise des données numériques de diffusion télévisuelle.

## Claims

1. Method for local recording of digital data received from a transmission network, which consists in encrypting the received digital data with a local recording key (KLEA) and in locally storing the encrypted data (7), **characterized by** the fact
- that a content key (CK) is generated,
- that the content key (CK) is combined with a base key (BK) to obtain the local recording key (KLEA),
- that the content key (CK) and the encrypted data (7) are stored together with the local recording key (KLEA).

2. Method according to claim 1, **characterized by** the fact that the base key (BK) is stored in a portable security module (6).

3. Method according to claim 2, **characterized by** the fact that the content key (CK) and the base key (BK) are combined in the portable security module (6).

4. Method according to any of the claims 1 to 3, **characterized by** the fact that the content key (CK) is signed with a signature key (SK) before being stored together with the encrypted data (7).

5. Method according to claim 4, **characterized by** the fact that the signature key (SK) is stored in a portable security module (6).

6. Method according to any of the claims 1 to 5, **characterized by** the fact that the content key (CK) is generated in a random manner at every recording of a digital data flow.

7. Method according to any of the claims 1 to 6, **characterized by** the fact that the recorded digital data is displayed by
- recovery of the stored content key (CK),
- verification of the signature with the signature key (SK),
- combination of the recovered content key (CK) with the base key (BK) for restoration of the local recording key (KLEA),
- decryption of the digital data (7) with the local recording key (KLEA),
- transmission of the digital data to the display means.

8. Method according to any of the claims 1 to 7, **characterized by** the fact
- that the digital data are received encrypted from the transmission network and are then decrypted by a encryption algorithm,
- that a different encryption algorithm is used for encryption with the local recording key (KLEA).

9. Method according to any of the claims 1 to 8, **characterized by** the fact that the digital data of television broadcasting is used.

## Patentansprüche

1. Verfahren zur lokalen Aufzeichnung digitaler Daten, die über ein Übertragungsnetz empfangen werden, bei dem die empfangenen digitalen Daten mit einem lokalen Aufzeichnungsschlüssel (KLEA) verschlüsselt werden und die verschlüsselten Daten (7) lokal gespeichert werden, **dadurch gekennzeichnet, dass**
- dass ein Inhaltsschlüssel (CK) erzeugt wird,
- dass der Inhaltsschlüssel (CK) und ein Basisschlüssel (BK) kombiniert werden, um den lokalen Aufzeichnungschlüssel (KLEA) zu erhalten,
- dass der Inhaltsschlüssel (CK) und die verschlüsselten Daten (7) zusammen mit dem lokalen Aufzeichnungsschlüssel (KLEA) gespeichert werden.

2. Verfahren nach Anspruch 1, **dadurch gekennzeichnet, dass** der Basisschlüssel (BK) in einem tragbaren Sicherheitsmodul (6) gespeichert ist.

3. Verfahren nach Anspruch 2, **dadurch gekennzeichnet, dass** der Inhaltsschlüssel (CK) und der Basisschlüssel (BK) in dem tragbaren Sicherheitsmodul (6) kombiniert werden.

4. Verfahren nach einem der Ansprüche 1 bis 3, **dadurch gekennzeichnet, dass** der Inhaltsschlüssel (CK) mit einem Signaturschlüssel (SK) signiert wird, bevor er zusammen mit den verschlüsselten Daten (7) gespeichert wird.

5. Verfahren nach Anspruch 4, **dadurch gekennzeichnet, dass** der Signaturschlüssel (SK) in einem tragbaren Sicherheitsmodul (6) gespeichert ist.

6. Verfahren nach einem der Ansprüche 1 bis 5, **dadurch gekennzeichnet, dass** der Inhaltsschlüssel (CK) bei jeder Aufzeichnung eines Stroms digitaler Daten zufällig erzeugt wird.

7. Verfahren nach einem der Ansprüche 1 bis 6, **dadurch gekennzeichnet, dass** die aufgezeichneten digitalen Daten angezeigt werden durch:
- Wiedergewinnen des gespeicherten Inhaltsschlüssels (CK),
- Verifizieren der Signatur mit dem Signaturschlüssel (SK),
- Kombinieren des wiedergewonnenen Inhaltsschlüssels (CK) mit dem Basisschlüssel (BK), um den lokalen Aufzeichnungsschlüssel (KLEA) wiederherzustellen,
- Entschlüsseln der digitalen Daten (7) mit dem lokalen Aufzeichnungsschlüssel (KLEA),
- Übertragen der digitalen Daten an die Anzeigemittel.

8. Verfahren nach einem der Ansprüche 1 bis 7, **dadurch gekennzeichnet,**
- **dass** die digitalen Daten vom Übertragungsnetz verschlüsselt empfangen werden und dann durch einen Verschlüsselungsalgorithmus entschlüsselt werden,
- **dass**, für die Verschlüsselung mit dem lokalen Aufzeichnungsschlüssel (KLEA) ein anderer Verschlüsselungsalgorithmus verwendet wird.

9. Verfahren nach einem der Ansprüche 1 bis 8, **dadurch gekennzeichnet, dass** digitale Fernsehsendungsdaten verwendet werden.
